# FASCICULE DE BREVET EUROPEEN

(11) **EP 2 789 132 B1**
(45) Date de publication et mention de la délivrance du brevet: **26.07.2017**
(21) Numéro de dépôt: 12794993.1
(22) Date de dépôt: 05.12.2012
(51) Int. Cl.: H04L 29/12, H04L 29/06

(54) **PASSERELLE ADAPTÉE POUR LA VOD**
FÜR VOD ANGEPASSTES GATEWAY
GATEWAY ADAPTED FOR VOD

(30) Priorité: 05.12.2011 FR 1161135
(43) Date de publication de la demande: 15.10.2014
(73) Titulaire: SAGEMCOM BROADBAND SAS, 92500 Rueil Malmaison (FR)
(72) Inventeur: KORBER, Nicolas, F-92500 Rueil Malmaison (FR)
(74) Mandataire: Le Guen-Maillet
(86) Numéro de dépôt international: PCT/EP2012/074451
(87) Numéro de publication internationale: WO 2013/083607

(56) Documents cités:
- EP-A1- 1 482 712
- EP-A1- 1 575 245
- EP-A1- 1 662 753
- EP-A1- 1 737 161
- EP-A1- 2 048 858
- WO-A1-95/04322
- WO-A1-2010/053413
- US-A1- 2009 083 406
- BERNARD ABOBA MICROSOFT: "The Mini-DHCP Server; draft-aboba-dhc-mini-04.txt", 20010929, no. 4, 29 septembre 2001 (2001-09-29), XP015009804, ISSN: 0000-0004
- DROMS BUCKNELL UNIVERSITY R: "Dynamic Host Configuration Protocol; rfc2131.txt", 19970301, 1 mars 1997 (1997-03-01), XP015007915, ISSN: 0000-0003

## Description

La présente invention concerne le domaine des passerelles d'accès internet, des décodeurs de services vidéo associés ainsi que les procédés de diffusion de contenu vidéo par un opérateur au travers d'une telle passerelle à destination d'un tel décodeur.

Nous appellerons dans ce document opérateur l'entité fournissant un service d'accès à un réseau de communication, typiquement Internet, couplé à un service d'accès à du contenu multimédia notamment vidéo.

Ce type d'opérateur offre son service et fournit pour ce faire généralement deux appareils. Un premier appareil est constitué d'une passerelle d'accès au réseau de communication. Elle est connue dans le grand public sous l'appellation anglaise de *box.* Techniquement, il s'agit généralement d'un modem, par exemple du type ADSL (*Asymetric Digital Subscriber Line* en anglais), mais qui peut être basé sur d'autres technologies telles que les réseaux câblés, la fibre optique ou autre. Ce modem est couplé à un routeur qui permet d'y connecter plusieurs appareils. La passerelle fait donc le lien entre un réseau de communication de données d'un côté et un réseau local auquel l'utilisateur connecte divers appareils. Ces appareils pouvant être des ordinateurs personnels, des téléphones intelligents (*smartphones* en anglais), des consoles de jeux, des téléviseurs, etc. Ces passerelles permettent à l'utilisateur d'accéder à un nombre grandissant de services utilisant le réseau de communication. On peut citer, parmi les plus populaires, l'accès à la téléphonie sur IP (*Internet Protocol* en anglais) et l'accès à la diffusion de chaînes de télévision.

L'accès à des services de diffusion de chaînes de télévision implique généralement un deuxième appareil appelé décodeur (*set top box* en anglais). Cet appareil sert à réceptionner les flux numériques qui transportent les chaînes de télévision et à reconstituer à partir de ces flux les signaux audio et vidéo pour une restitution sur un téléviseur.

En complément de ce service télévisuel de base tend à se généraliser l'offre d'un service de vidéo à la demande du type VOD *(Video On Demand* en anglais). Cette offre consiste en un catalogue de contenu disponible sur les serveurs de l'opérateur. Ce catalogue est accessible à l'utilisateur sur son téléviseur via son décodeur. Le choix d'un contenu particulier provoque une requête aux serveurs qui diffusent alors le contenu à destination du décodeur pour une restitution sur le téléviseur. Ces opérations peuvent être faites en utilisant les technologies classiques des réseaux IP.

Toutefois, ce service étant payant, l'opérateur souhaite généralement disposer d'un contrôle élevé des contenus diffusés et de leur destination. En particulier, il souhaite éviter que le contenu diffusé puisse être facilement détourné sur un ordinateur personnel.

On peut noter le document « Mini-DHCP Server », Bernard Aboba, Microsoft, 29 septembre 2001 qui divulgue un serveur DHCP adapté à une mise en oeuvre au sein d'une passerelle domestique.

On peut aussi noter le document de brevet EP 1 575 245 A1 qui divulgue une méthode de gestion d'adresses réseau pour des communications voie privées.

On peut enfin noter le document de brevet EP 1 737 161 A1 qui divulgue un dispositif d'interconnexion, comprenant une première interface vers un premier réseau, une deuxième interface vers un second réseau, un pont pour connecter ladite première interface à ladite seconde interface, et un routeur comprenant des moyens de routage. Le dispositif d'interconnexion comprend un serveur DHCP local adapté pour détecter les dispositifs sur le premier réseau et les classifier selon un premier type ou un second type. Le dispositif d'interconnexion est tel que les moyens de routage sont utilisés pour les dispositifs du premier type, et ne sont pas utilisés pour les dispositifs du second type.

L'invention vise à résoudre les problèmes précédents par l'utilisation d'une adresse MAC virtuelle dédiée à la VOD sur le décodeur. Cette adresse est ensuite reconnue par la passerelle. La passerelle implémente un circuit direct dirigeant directement le trafic lié à cette adresse virtuelle entre l'interface d'accès au réseau de communication et le port physique de la passerelle sur lequel est connecté le décodeur. Avantageusement, le circuit est configuré dynamiquement par interception de la requête DHCP utilisée pour configurer cette adresse virtuelle.

Plus précisément, l'invention vise à résoudre ces problèmes conformément aux revendications 1 à 3 ci-jointes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'un exemple de réalisation de l'invention.
La Fig. 2 illustre les échanges de messages typiques d'un exemple de réalisation de l'invention.

L'invention a été développée dans le cadre de l'offre d'un service de vidéo à la demande, mais elle peut s'appliquer de manière identique pour tout service. La solution technique retenue n'est pas spécifique du service.

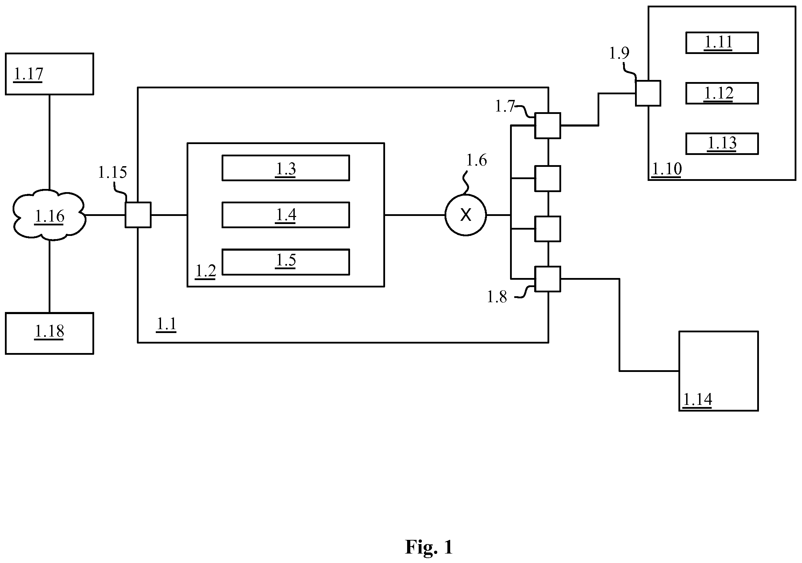

La Fig. 1 illustre l'architecture d'un exemple de réalisation de l'invention. Cette figure nous montre une passerelle 1.1 d'accès à un réseau de communication étendu 1.16. Ce réseau est généralement appelé WAN (*Wide Area Network* en anglais), par opposition au réseau local généralement appelé LAN (*Local Area Network* en anglais). La passerelle, comme son nom l'indique, sert d'interface entre les deux réseaux.

Cette passerelle dispose donc d'un port physique 1.15 relié au WAN. Cette liaison est typiquement une liaison point à point utilisant une technologie parmi les technologies ADSL, câble, fibre optique pour les plus courantes. Toute technologie réseau peut être ici utilisée.

La passerelle dispose typiquement d'un ensemble de ports physique d'accès au LAN. La figure référence un port 1.7 sur lequel est physiquement connecté le décodeur 1.10. Elle référence également à titre illustratif un port 1.8 sur lequel est physiquement connecté un autre appareil 1.14 qui peut être, par exemple, un ordinateur personnel.

Le trafic réseau est routé sur ses interfaces par un routeur (*switch* en anglais) 1.6. Le fonctionnement d'un tel routeur est largement connu de l'homme du métier et nous ne détaillerons pas ici ses fonctionnalités connues basées sur un routage en couche 3, la couche IP, classique à base de tables de routage. Un tel routeur implémente typiquement une fonctionnalité de traduction d'adresse en couche 3 connue sous le nom de NAT (*Network Address Translation* en anglais). Ce mécanisme permet de ne rendre publique sur le WAN que l'adresse de l'interface WAN 1.15 de la passerelle. Toute requête ayant pour origine un appareil de LAN arrive sur la passerelle et est traitée par le NAT pour remplacer l'adresse IP d'origine par celle de la passerelle avant d'être relayée vers le WAN. La réponse arrive donc à destination de la passerelle qui reconnaît le message et remplace l'adresse de destination par l'adresse de l'appareil du LAN à l'origine de la requête avant de relayer cette réponse sur le LAN. Le module de traitement NAT est référencé 1.3 au sein de la pile logicielle 1.2 qui gère la passerelle.

Cette pile logicielle 1.2 de gestion de la passerelle héberge également typiquement un serveur DHCP (*Dynamic Host Control Protocol* en anglais) 1.4 qui permet de configurer dynamiquement sans intervention de l'utilisateur tout appareil se connectant sur le LAN. Le fonctionnement précis du protocole DHCP peut être trouvé dans les RFC (*Request For Comment* en anglais) numéros 1531, 1534, 2131 et 2132. Nous retiendrons ici simplement que le protocole fonctionne de la manière suivante : un appareil (par exemple, le décodeur 1.10 de la Fig. 1) qui se connecte au LAN envoie un message diffusé (*broadcast* en anglais) en couche 2 avec son adresse couche 2, c'est-à-dire son adresse MAC. Ce message est appelé un « DHCP discover », il vise à découvrir l'existence d'un serveur DHCP sur le réseau. Le ou chaque serveur DHCP du réseau répond alors à l'appareil en lui proposant une adresse couche 3 disponible, c'est-à-dire une adresse IP. L'appareil diffuse alors une requête de configuration au serveur DHCP de son choix lequel lui répond avec les paramètres de connexion demandés. Ces paramètres comprennent typiquement l'adresse couche IP définitive de l'appareil, un masque de sous réseau et l'adresse IP de la passerelle pour joindre le WAN.

Le décodeur 1.10 dispose d'un port physique 1.9 connecté directement à la passerelle au port 1.7 de cette passerelle. Typiquement, le décodeur 1.10 dispose d'une adresse MAC et obtient sa configuration couche 3 via le mécanisme DHCP décrit précédemment. Alternativement, cette configuration peut être enregistrée statiquement dans le décodeur 1.10. Lorsque ce décodeur 1.10 communique avec le WAN en utilisant ces mécanismes classiques, le trafic est vu du WAN comme émanant de la passerelle 1.1 du fait du mécanisme de traduction d'adresse NAT effectué par la passerelle. Cette caractéristique ne pose pas de problème particulier pour un certain nombre de services utilisés par le décodeur, tels que l'accès à l'internet ou autre.

Par contre pour un service tel que le service de VOD, l'opérateur souhaite plus de contrôle et « voir » au niveau réseau directement le décodeur 1.10, ne serait-ce que pour s'assurer que les flux associés à la VOD sont bien consommés par le décodeur et non détournés dans le LAN.

Pour obtenir ce contrôle de certains services, l'opérateur va, en ce qui concerne les services qu'il souhaite contrôler, gérer les décodeurs comme faisant partie d'un réseau de type LAN propre à l'opérateur, dit ci-après réseau LAN de l'opérateur, sous le contrôle direct de l'opérateur et non pas comme des appareils du réseau LAN de l'utilisateur. Plus exactement, le décodeur 1.10 ne sera vu comme un appareil du réseau LAN de l'opérateur qu'uniquement en ce qui concerne le service que l'opérateur veut contrôler, par exemple, ici le service de VOD. En ce qui concerne les autres services proposés par le décodeur 1.10, le décodeur 1.10 fonctionnera comme un appareil classique du réseau LAN de l'utilisateur.

La solution adoptée repose sur l'utilisation d'adresses couches 2, c'est-à-dire d'adresses MAC, virtuelles au sein du décodeur 1.10. Une première adresse virtuelle 1.l est dédiée au service que l'on veut contrôler de manière particulière, ici le service VOD. Cette adresse virtuelle MAC va être configurée au niveau de la couche 3, la couche IP, comme une adresse du réseau LAN de l'opérateur. Pour les autres services, une ou plusieurs autres adresses virtuelles, les adresses 1.12 et 1.13 sur la figure, sont gérées de manière traditionnelle et configurées au niveau de la couche IP comme des interfaces du réseau LAN de l'utilisateur.

L'utilisation d'adresses virtuelles en couche 2 revient à utiliser des interfaces logiques différentes utilisant toutes une même interface physique. Chaque interface logique dispose de sa propre adresse en couche 2 pour séparer le trafic au niveau de cette couche entre la passerelle 1.1 et le décodeur 1.10. Chaque interface dispose de sa propre configuration en couche 3, la couche IP, pour communiquer avec les autres entités du réseau.

On obtient ainsi une séparation des trafics réseau consacrés au service de VOD et des autres trafics réseau au sein du décodeur. Le trafic VOD n'est donc jamais routé au sein du réseau LAN de l'utilisateur rendant un éventuel détournement du flux difficile pour l'utilisateur.

Le routage correct des deux types de flux entre le WAN et le décodeur 1.10, le premier type étant le flux dédié au service VOD et le second étant le flux classique, nécessite une adaptation au niveau de la passerelle. Cette adaptation est faite sous la forme d'un module de gestion 1.5 qui établit un circuit direct (*Bridge* en anglais) en couche 2 entre l'interface 1.7 connectée au décodeur côté LAN et l'interface 1.15 du réseau WAN.

Ce module de gestion 1.5 analyse le trafic en couche 2 qui arrive sur la passerelle 1.1. Il détecte tous les messages arrivant sur le port physique 1.7 et ayant l'adresse virtuelle 1.11 dédiée au service protégé comme adresse MAC source. Ces paquets sont alors directement envoyés sur l'interface WAN 1.15 sans être traités par le module de routage 1.6 classique ou de traduction d'adresses 1.3.

De même, le trafic couche 2 arrivant sur l'interface WAN 1.15 et ayant comme adresse de destination l'adresse MAC 1.11 dédiée au service protégé est directement envoyé sur l'interface 1.7 sans être traité par le module de routage 1.6 classique ou de traduction d'adresses 1.3.

L'opérateur affecte une adresse IP à l'interface virtuelle du décodeur dédiée au service protégé au sein d'un réseau LAN qui lui est propre et est donc dédié à ce service. Le moyen utilisé par l'opérateur pour acheminer les paquets IP destinés au décodeur 1.10 sur la passerelle 1.1 est en dehors de la description de ce document. On peut, par exemple, utiliser une encapsulation IP dans de l'IP. Ainsi, les données relatives au service protégé du décodeur 1.10 sont transportées au niveau de la couche 2 à destination de l'adresse MAC virtuelle du décodeur 1.10, car celui-ci fait partie du réseau LAN de l'opérateur dédié au service. Le paquet sera donc détecté par le module 1.5 affecté au circuit direct et acheminé au sein de la passerelle 1.1 directement vers l'interface 1.7 connectée au décodeur 1.10.

La configuration du module 1.5 de gestion du circuit direct peut être faite de manière statique ou de manière dynamique. Selon un mode de réalisation avantageux de l'invention, le module 1.5 de gestion de circuit est configuré dynamiquement. Pour cela, le décodeur 1.10 est doté de moyens pour envoyer une requête de découverte DHCP particulière relative à la configuration de l'une de ses adresses virtuelles. Cette requête est une requête (DHCP discover) de découverte du serveur DHCP qui contient un identifiant particulier permettant de la distinguer d'une requête de découverte DHCP traditionnelle. Cet identifiant peut être un paramètre particulier dans l'en-tête du paquet DHCP.

La passerelle 1.1 et plus particulièrement son serveur DHCP 1.4, dispose alors de moyens pour détecter cette requête de découverte DHCP particulière marquée à cet effet. Au lieu de servir cette requête par une réponse d'offre DHCP, la passerelle la relaie sans la traiter à tout serveur DHCP distant 1.17 dans le réseau WAN de l'opérateur. Il en profite pour noter l'adresse MAC d'origine de la requête (l'adresse virtuelle du décodeur 1.10 concernant le service protégé) et pour configurer le module 1.5 de gestion du circuit direct avec cette adresse MAC.

Une fois que ceci est fait, la réponse d'offre DHCP émise par le serveur 1.17 DHCP de l'opérateur est automatiquement relayée, au moyen du circuit direct qui vient d'être établi par le module de gestion 1.5, au décodeur 1.10 qui peut alors recevoir sa configuration niveau 3, c'est-à-dire IP.

Cette façon de programmer dynamiquement, au moyen du module de gestion 1.5, le circuit entre l'interface 1.7 connectée au décodeur côté LAN et l'interface 1.15 du réseau WAN permet de s'adapter automatiquement en cas de changement de décodeur ou si le décodeur n'est pas fourni par l'opérateur.

Les requêtes de découverte DHCP émises pour la configuration des autres adresses virtuelles du décodeur ne disposent pas de marqueur les identifiant comme relatives au service protégé. Elles sont donc traitées normalement par le serveur 1.4 DHCP de la passerelle et configurées au sein du réseau LAN local de l'utilisateur.

Le trafic relatif au service protégé en lui-même, ayant pour origine ou destination l'interface virtuelle du décodeur 1.10, est également relayé vers les serveurs 1.18 concernés de l'opérateur. Typiquement, il s'agit de requête RTSP (*Real Time Streaming Protocol* en anglais) dans le cas de VOD.

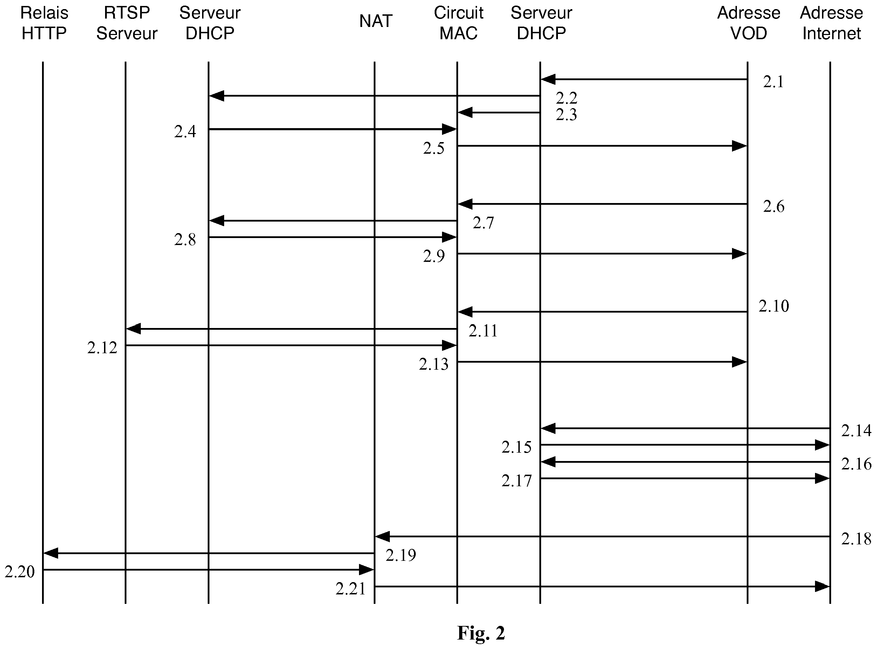

La Fig. 2 illustre les échanges de messages impliqués dans les différentes phases de fonctionnement de l'invention selon le mode de réalisation où la configuration du circuit est automatique.

Un premier ensemble de messages illustre la configuration DHCP de l'adresse MAC virtuelle 1.11 du décodeur 1.10 auprès de l'opérateur. La requête de découverte DHCP 2.1 est envoyée depuis cette adresse MAC virtuelle 1.11 et est reçue par le serveur 1.4 DHCP de la passerelle 1.1. Elle est relayée, 2.2, vers le serveur 1.17 DHCP de l'opérateur. Le serveur DHCP 1.4 de la passerelle 1.1 en profite pour configurer, 2.3, le module de gestion de circuit direct 1.5 de la passerelle 1.1 en créant le circuit direct sur l'adresse MAC virtuelle 1.11 contenue dans la requête 2.1. La réponse, sous la forme d'une offre DHCP 2.4 est renvoyée et relayée directement par le module 1.5, 2.5 vers le décodeur 1.10.

Les messages suivants correspondent à une requête en configuration 2.6 de l'adresse MAC virtuelle 1.11. Cette requête est relayée 2.7 par le module de gestion de circuit direct 1.5 vers le réseau LAN de l'opérateur où elle est traitée par le serveur DHCP. La réponse 2.8, traverse le module de gestion de circuit direct 1.5 pour être relayée 2.9 vers le décodeur 1.10. La configuration portée par la réponse 2.9 permet la configuration au niveau 3 de l'adresse MAC virtuelle 1.11 du décodeur 1.10 au sein d'un réseau distant, typiquement un réseau LAN de l'opérateur dédié au service protégé.

Les messages suivants illustrent une requête relative au service protégé par l'invention. Une requête RTSP 2.10 est émise à partir de l'adresse MAC virtuelle 1.11 dédiée au service protégé du décodeur 1.10. Cette requête 2.10 est capturée par le module de gestion de circuit direct 1.5 et est relayée 2.11 vers le réseau LAN de l'opérateur. Elle y poursuit sa route vers le serveur de VOD qui répond à la requête en renvoyant une réponse 2.12. La réponse est envoyée sous la forme d'un trafic IP du réseau LAN de l'opérateur, à destination du décodeur 1.10. Puis, arrivé sur la passerelle 1.1, ce trafic est dirigé 2.13 par le module de gestion de circuit direct 1.5 vers le décodeur 1.10, car à destination, au niveau de la couche 2, de l'adresse MAC virtuelle 1.11 du décodeur 1.10.

Les messages suivants illustrent le fonctionnement des autres interfaces virtuelles du décodeur 1.10, celles qui utilisent les adresses virtuelles 1.12 et 1.13, par exemple. Chaque interface doit obtenir sa configuration réseau. Pour ce faire, il envoie une première requête de découvert DHCP 2.14. Cette requête est reçue par le serveur DHCP de la passerelle 1.10. Comme cette requête ne comporte pas de marqueur relatif au service protégé, elle est servie de manière classique par le serveur 1.4 DHCP de la passerelle 1.1 qui répond donc par une offre DHCP 2.15. Il s'ensuit la requête de configuration 2.16 et sa réponse 2.17. À partir de ce moment, l'interface est configurée comme faisant partie du réseau local LAN de l'utilisateur et peut utiliser la passerelle 1.1 pour accéder à tout service sur le réseau de communication WAN de manière classique.

Typiquement, une requête HTTP (*Hyper Text Transfer Protocol* en anglais) 2.18 est routée au travers du système de traduction d'adresses 1.3 et est relayée 2.19 vers le serveur de destination, typiquement via un relais HTTP (*proxy* en anglais) de l'opérateur. Lorsque le relais reçoit la réponse, il la relaie 2.20 vers la passerelle. Le mécanisme de traduction d'adresse opéré par le module 1.3 permet le routage de la réponse 2.21, dans le routeur 1.6, vers le décodeur 1.10.

On constate que le trafic relatif au service protégé est séparé du trafic autre. Le premier est routé au sein d'un réseau LAN couche 3 spécifique de l'opérateur et contrôlé par celui-ci. Le trafic autre est routé normalement et séparément au sein du réseau LAN de l'utilisateur.

Une alternative au mode de réalisation décrit ci-dessus consiste à utiliser des réseaux locaux virtuels appelés VLAN (*Virtual Local Area Network* en anglais). Ce mécanisme bien connu permet également de séparer les flux de données d'une même interface physique à l'aide d'adresses virtuelles en couche 2. En effet, les réseaux locaux virtuels sont des techniques de tunnels chiffrés en couche 2. Chaque adresse virtuelle pourrait utiliser un VLAN particulier. Au niveau de la passerelle, la différenciation des flux pourrait alors se faire par VLAN et non par adresse MAC.

Nous pourrions alors avoir un premier flux de données dédié au service protégé et marqué par un VLAN, par exemple en utilisant l'étiquette 1001. Un second flux dédié au contrôle et marqué par un VLAN utilisant par exemple l'étiquette 1002, tandis que les autres flux de données seraient marqués par un VLAN utilisant l'étiquette 1003. Chacun de ces VLANs utilisant sa propre adresse MAC virtuelle au sein du décodeur.

Cette alternative présente toutefois quelques contraintes. Le décodeur doit être en mesure de marquer les flux. La passerelle doit supporter les VLAN. L'opérateur doit également être en mesure de gérer les VLAN pour le service protégé. Dans le cas contraire, la passerelle doit être en mesure de supprimer le marquage des VLAN avant de relayer le trafic relatif au service protégé vers l'opérateur. Il est encore nécessaire que l'opérateur ou la passerelle supprime le marquage des flux de données devant être relayés vers le réseau internet. En effet, les VLAN ne peuvent pas exister dans le monde internet ni sur les machines connectées au LAN. Le serveur DHCP de la passerelle doit toujours discriminer les paquets provenant du décodeur afin de les relayer vers le serveur DHCP de l'opérateur. Cette discrimination peut être identique à celle faite dans le premier mode de réalisation ou mettre en oeuvre l'utilisation des VLAN.

## Revendications

1. Dispositif de traitement de l'information destiné à servir de passerelle entre un réseau local de communication et un réseau de communication étendu d'un opérateur qui comporte :
- une pluralité de ports physiques (1.7, 1.8) permettant de connecter des appareils du réseau local ;
- un port physique (1.15) connecté au réseau de communication étendu de l'opérateur ;
- un routeur (1.6) permettant le routage des flux de données entre ces différents ports ;
- un module de traitement NAT de traduction d'adresses en couche 3,
- un module de gestion de circuit direct (1.5) pour relayer directement sans traduction tout trafic correspondant à un service particulier issu du réseau de communication étendu de l'opérateur vers un appareil du réseau local utilisant ledit service particulier et vice versa,
- un serveur DHCP local (1.4) pour le traitement de toute requête DHCP issue d'un appareil connecté sur ledit réseau local,
**caractérisé en ce qu'**il est destiné à recevoir la connexion sur l'un desdits ports physiques (1.7 ; 1.8) d'appareils possédant une pluralité d'adresses virtuelles en couche 2, dont au moins une (1.11) est dédiée à un service particulier;
et **en ce qu'**il comporte :
- des moyens pour détecter, dans toute requête de découverte DHCP que ledit dispositif reçoit d'un appareil connecté, la présence ou non d'un marqueur permettant de distinguer toute requête de découverte DHCP relative audit service particulier de toute autre requête de découverte DHCP,
- des moyens pour relayer toute requête de découverte DHCP pour laquelle un tel marqueur a été détecté vers un serveur DHCP distant (1.17) du réseau de communication étendu de l'opérateur, sans que, contrairement à toute requête de découverte DHCP pour laquelle un tel marqueur n'a pas été détecté, elle ne soit traitée par ledit serveur DHCP local (1.4);
- des moyens pour configurer, à la détection d'un tel marqueur, le module de gestion de circuit direct (1.5) à l'aide de l'adresse virtuelle en couche 2 à l'origine de ladite requête de découverte DHCP particulière de manière que ledit module de gestion de circuit direct (1.5) établisse alors un circuit direct en couche 2 entre le port physique (1.15) connecté au réseau de communication étendu de l'opérateur et l'un des ports physiques permettant de connecter des appareils du réseau local (1.7) pour tout trafic portant ladite adresse virtuelle en couche 2,
le trafic non concerné par ledit circuit direct étant l'objet d'une traduction d'adresses en couche 3 par le module de traitement NAT.

2. Système de traitement de l'information comprenant :
d'une part, une passerelle entre un réseau local de communication et un réseau de communication étendu d'un opérateur, ladite passerelle comportant :
- une pluralité de ports physiques (1.7, 1.8) permettant de connecter des appareils du réseau local ;
- un port physique (1.15) connecté au réseau de communication étendu de l'opérateur ;
- un routeur (1.6) permettant le routage des flux de données entre ces différents ports ;
- un module de traitement NAT pour effectuer une traduction d'adresses en couche 3 du trafic entre le réseau de communication étendu de l'opérateur vers un appareil du réseau local autre que celui utilisant ledit service particulier et vice versa,
- un module de gestion de circuit direct (1.5) pour relayer directement sans traduction tout trafic correspondant audit service particulier issu du réseau de communication étendu de l'opérateur vers ledit appareil du réseau local utilisant ledit service particulier et vice versa,
- un serveur DHCP local (1.4) pour le traitement de toute requête DHCP issue d'un appareil connecté sur ledit réseau local,
et, d'autre part, au moins un appareil du réseau local utilisant un service particulier,
**caractérisé en ce que**
- ledit appareil du réseau local qui utilise ledit service particulier comporte :
- une pluralité d'adresses virtuelles en couche 2 ;
- des moyens pour marquer d'un marqueur relatif audit service particulier une requête de découverte DHCP relative à la configuration de l'une de ces adresses virtuelles pour ledit service particulier utilisé par ledit appareil,
et **en ce que** ladite passerelle comporte :
- des moyens pour détecter, à réception d'une requête de découverte DHCP, la présence ou non d'un marqueur relatif audit service particulier,
- des moyens pour relayer toute requête de découverte DHCP pour laquelle un tel marqueur a été détecté vers un serveur DHCP distant (1.17) du réseau de communication étendu de l'opérateur, sans que, contrairement à toute requête de découverte DHCP pour laquelle un tel marqueur n'a pas été détecté, elle ne soit traitée par ledit serveur DHCP local (1.4);
- des moyens pour configurer, à la détection d'un tel marqueur, le module de gestion de circuit direct (1.5) à l'aide de l'adresse virtuelle en couche 2 à l'origine de ladite requête de découverte DHCP particulière de manière que ledit module de gestion de circuit direct (1.5) établisse un circuit direct en couche 2 entre le port physique (1.15) connecté au réseau de communication étendu de l'opérateur et celui des ports physiques auquel est connecté ledit appareil de réseau local utilisant ledit service, pour tout trafic portant ladite adresse virtuelle en couche 2.

3. Procédé de configuration d'un dispositif de traitement de l'information destiné à servir de passerelle entre un réseau local de communication et un réseau de communication étendu d'un opérateur qui comporte :
- une pluralité de ports physiques (1.7, 1.8) permettant de connecter des appareils du réseau local ;
- un port physique (1.15) connecté au réseau de communication étendu de l'opérateur ;
- un routeur (1.6) permettant le routage des flux de données entre ces différents ports ;
- un module de traitement NAT de traduction d'adresses en couche 3,
- un module de gestion de circuit direct (1.5) pour relayer directement sans traduction tout trafic correspondant à un service particulier issu du réseau de communication étendu de l'opérateur vers un appareil du réseau local utilisant ledit service particulier et vice versa, et
- un serveur DHCP local (1.4) pour le traitement de toute requête DHCP issue d'un appareil connecté sur ledit réseau local,
**caractérisé en ce que** ledit procédé comporte les étapes suivantes :
- une étape de détection d'un marqueur relatif à un service particulier dont est pourvue une requête de découverte DHCP particulière que ledit dispositif reçoit d'un appareil connecté (1.10);
- une étape de relais de toute requête de découverte DHCP pour laquelle un tel marqueur a été détecté vers un serveur DHCP distant (1.17) du réseau de communication étendu de l'opérateur, sans que, contrairement à toute requête de découverte DHCP pour laquelle un tel marqueur n'a pas été détecté, elle ne soit traitée par ledit serveur DHCP local (1.4);
- une étape d'établissement, à la détection d'un tel marqueur, d'un circuit direct en couche 2 entre le port physique (1.15) connecté au réseau de communication étendu de l'opérateur et l'un des ports physiques permettant de connecter des appareils du réseau local (1.7) pour tout trafic portant l'adresse virtuelle en couche 2 portée par ladite requête de découverte DHCP particulière,
le trafic non concerné par ledit circuit direct étant l'objet d'une traduction d'adresses en couche 3 par le module de traitement NAT.

## Patentansprüche

1. Vorrichtung zur Informationsverarbeitung, die dazu bestimmt ist, als Gateway zwischen einem lokalen Kommunikationsnetz und einem Fernkommunikationsnetz eines Betreibers zu dienen, die aufweist:
- eine Vielzahl physikalischer Ports (1.7, 1.8), die es ermöglichen, Geräte des lokalen Netzes zu verbinden;
- einen mit dem Fernkommunikationsnetz des Betreibers verbundenen physikalischen Port (1.15);
- einen Router (1,6), der das Routen der Datenströme zwischen diesen verschiedenen Ports ermöglicht;
- ein NAT-Verarbeitungsmodul zur Schicht-3-Adressenumsetzung,
- ein Direktschaltung-Verwaltungsmodul (1.5) zur direkten Weiterleitung ohne Umsetzung jedes einem vom Fernkommunikationsnetz des Betreibers stammenden bestimmten Dienst entsprechenden Verkehrs zu einem den bestimmten Dienst verwendenden Gerät des lokalen Netzes und umgekehrt,
- einen lokalen DHCP-Server (1.4) zur Verarbeitung jeder von einem mit dem lokalen Netz verbundenen Gerät stammenden DHCP-Anforderung,
**dadurch gekennzeichnet, dass** sie dazu bestimmt ist, die Verbindung an einem der physikalischen Ports (1.7; 1.8) von Geräten zu empfangen, die eine Vielzahl virtueller Schicht-2-Adressen besitzen, von denen mindestens eine (1.11) einem bestimmten Dienst dediziert ist;
und dass sie aufweist:
- Einrichtungen, um in jeder DHCP-Erkennungsanforderung, die die Vorrichtung von einem verbundenen Gerät empfängt, das Vorhandensein oder nicht eines Markierers zu erfassen, der es ermöglicht, jede DHCP-Erkennungsanforderung bezüglich des bestimmten Diensts von jeder anderen DHCP-Erkennungsanforderung zu unterscheiden,
- Einrichtungen, um jede DHCP-Erkennungsanforderung, für die ein solcher Markierer erfasst wurde, zu einem fernen DHCP-Server (1.17) des Fernkommunikationsnetzes des Betreibers weiterzuleiten, ohne dass sie, im Gegensatz zu jeder DHCP-Erkennungsanforderung, für die kein solcher Markierer erfasst wurde, vom lokalen DHCP-Server (1.4) verarbeitet wird;
- Einrichtungen, um bei Erfassung eines solchen Markierers das Direktschaltung-Verwaltungsmodul (1.5) mit Hilfe der virtuellen Schicht-2-Adresse, die Auslöser der bestimmten DHCP-Erkennungsanforderung ist, so zu konfigurieren, dass das Direktschaltung-Verwaltungsmodul (1.5) dann eine Schicht-2-Direktschaltung zwischen dem mit dem Fernkommunikationsnetz des Betreibers verbundenen physikalischen Port (1.15) und einem der physikalischen Ports aufbaut, die es ermöglichen, Geräte des lokalen Netzes (1.7) für jeden Verkehr zu verbinden, der die virtuelle Schicht-2-Adresse trägt,
wobei der nicht von der Direktschaltung betroffene Verkehr Gegenstand einer Schicht-3-Adressenumsetzung durch das NAT-Verarbeitungsmodul ist.

2. System zur Informationsverarbeitung, das enthält:
einerseits ein Gateway zwischen einem lokalen Kommunikationsnetz und einem Fernkommunikationsnetz eines Betreibers, wobei das Gateway enthält:
- eine Vielzahl physikalischer Ports (1.7, 1.8), die es ermöglichen, Geräte des lokalen Netzes zu verbinden;
- einen mit dem Fernkommunikationsnetz des Betreibers verbundenen physikalischen Port (1.15);
- einen Router (1.6), der das Routen der Datenströme zwischen diesen verschiedenen Ports ermöglicht;
- ein NAT-Verarbeitungsmodul, um eine Schicht-3-Adressenumsetzung des Verkehrs zwischen dem Fernkommunikationsnetz des Betreibers und einem Gerät des lokalen Netzes anders als dasjenige durchzuführen, das den bestimmten Dienst verwendet, und umgekehrt,
- ein Direktschaltung-Verwaltungsmodul (1.5) zur direkten Weiterleitung ohne Umsetzung jedes dem vom Fernkommunikationsnetz des Betreibers stammenden bestimmten Dienst entsprechenden Verkehrs zu dem den bestimmten Dienst verwendenden Gerät des lokalen Netzes und umgekehrt,
- einen lokalen DHCP-Server (1.4) für die Verarbeitung jeder DHCP-Anforderung, die von einem mit dem lokalen Netz verbundenen Gerät stammt,
und andererseits mindestens ein Gerät des lokalen Netzes, das einen bestimmten Dienst verwendet,
**dadurch gekennzeichnet, dass** das Gerät des lokalen Netzes, das den bestimmten Dienst verwendet, aufweist:
- eine Vielzahl virtueller Schicht-2-Adressen;
- Einrichtungen, um eine DHCP-Erkennungsanforderung betreffend die Konfiguration einer dieser virtuellen Adressen für den vom Gerät verwendeten bestimmten Dienst mit einem den bestimmten Dienst betreffenden Markierer zu markieren,
und dass das Gateway aufweist:
- Einrichtungen, um bei Empfang einer DHCP-Erkennungsanforderung das Vorhandensein oder nicht eines den bestimmten Dienst betreffenden Markierers zu erfassen,
- Einrichtungen, um jede DHCP-Erkennungsanforderung, für die ein solcher Markierer erfasst wurde, zu einem fernen DHCP-Server (1.17) des Fernkommunikationsnetzes des Betreibers weiterzuleiten, ohne dass sie, im Gegensatz zu jeder DHCP-Erkennungsanforderung, für die kein solcher Markierer erfasst wurde, vom lokalen DHCP-Server (1.4) verarbeitet wird;
- Einrichtungen, um bei Erfassung eines solchen Markierers das Direktschaltung-Verwaltungsmodul (1.5) mit Hilfe der virtuellen Schicht-2-Adresse, die Auslöser der bestimmten DHCP-Erkennungsanforderung ist, so zu konfigurieren, dass das Direktschaltung-Verwaltungsmodul (1.5) eine Schicht-2-Direktschaltung zwischen dem mit dem Fernkommunikationsnetz des Betreibers verbundenen physikalischen Port (1.15) und demjenigen der physikalischen Ports aufbaut, mit dem das den Dienst verwendende Gerät des lokalen Netzes verbunden ist, für jeden die virtuelle Schicht-2-Adresse tragenden Verkehr.

3. Verfahren zur Konfiguration einer Vorrichtung zur Informationsverarbeitung, die dazu bestimmt ist, als Gateway zwischen einem lokalen Kommunikationsnetz und einem Fernkommunikationsnetz eines Betreibers zu dienen, das aufweist:
- eine Vielzahl physikalischer Ports (1.7, 1.8), die es ermöglichen, Geräte des lokalen Netzes zu verbinden;
- einen mit dem Fernkommunikationsnetz des Betreibers verbundenen physikalischen Port (1.15);
- einen Router (1.6), der das Routen der Datenströme zwischen diesen verschiedenen Ports ermöglicht;
- ein NAT-Verarbeitungsmodul zur Umsetzung von Schicht-3-Adressen,
- ein Direktschaltung-Verwaltungsmodul (1.5) zur direkten Weiterleitung ohne Umsetzung jedes einem vom Fernkommunikationsnetz des Betreibers stammenden bestimmten Dienst entsprechenden Verkehrs zu einem den bestimmten Dienst verwendenden Gerät des lokalen Netzes und umgekehrt,
- einen lokalen DHCP-Server (1.4) für die Verarbeitung jeder von einem mit dem lokalen Netz verbundenen Gerät stammenden DHCP-Anforderung,
**dadurch gekennzeichnet, dass** das Verfahren die folgenden Schritte aufweist:
- einen Schritt der Erfassung eines Markierers betreffend einen bestimmten Dienst, mit dem eine bestimmte DHCP-Erkennungsanforderung versehen ist, die die Vorrichtung von einem verbundenen Gerät (1.10) empfängt;
- einen Schritt der Weiterleitung jeder DHCP-Erkennungsanforderung, für die ein solcher Markierer erfasst wurde, zu einem fernen DHCP-Server (1.17) des Fernkommunikationsnetzes des Betreibers, ohne dass sie, im Gegensatz zu jeder DHCP-Erkennungsanforderung, für die kein solcher Markierer erfasst wurde, vom lokalen DHCP-Server (1.4) verarbeitet wird;
- einen Schritt des Aufbaus, bei Erfassung eines solchen Markierers, einer Schicht-2-Direktschaltung zwischen dem mit dem Fernkommunikationsnetz des Betreibers verbundenen physikalischen Port (1.15) und einem der physikalischen Ports, die es ermöglichen, Geräte des lokalen Netzes (1.7) zu verbinden, für jeden Verkehr, der die virtuelle Schicht-2-Adresse trägt, die von der bestimmten DHCP-Erkennungsanforderung getragen wird,
wobei der nicht von der Direktschaltung betroffene Verkehr Gegenstand einer Schicht-3-Adressenumsetzung durch das NAT-Verarbeitungsmodul ist.

## Claims

1. Information processing device intended to serve as gateway between a local area communication network and a wide area communication network of an operator which comprises:
- a plurality of physical ports (1.7, 1.8) making it possible to connect apparatuses of the local area network;
- a physical port (1.15) connected to the wide area communication network of the operator;
- a router (1.6) allowing the routing of the data streams between these various ports;
- a NAT processing module for translating addresses into layer 3,
- a direct circuit management module (1.5) for relaying directly without translation any traffic corresponding to a particular service arising from the wide area communication network of the operator to an apparatus of the local area network using said particular service and vice versa,
- a local area DHCP server (1.4) for processing any DHCP request arising from an apparatus connected to said local area network,
**characterized in that** it is intended to receive the connection of one of said physical ports (1.7; 1.8) of apparatuses possessing a plurality of layer 2 virtual addresses, at least one (1.11) of which is dedicated to a particular service;
and **in that** it comprises:
- means for detecting, in any DHCP discovery request that said device receives from a connected apparatus, the presence or otherwise of a marker making it possible to distinguish any DHCP discovery request relating to said particular service from any other DHCP discovery request,
- means for relaying any DHCP discovery request for which such a marker has been detected to a remote DHCP server (1.17) of the wide area communication network of the operator, without, contrary to any DHCP discovery request for which such a marker has not been detected, it being processed by said local area DHCP server (1.4);
- means for configuring, on detection of such a marker, the direct circuit management module (1.5) with the aid of the layer 2 virtual address at the origin of said particular DHCP discovery request in such a way that said direct circuit management module (1.5) then establishes a layer 2 direct circuit between the physical port (1.15) connected to the wide area communication network of the operator and one of the physical ports making it possible to connect apparatuses of the local area network (1.7) for any traffic carrying said layer 2 virtual address,
the traffic not involved in said direct circuit being the subject of a translation of addresses into layer 3 by the NAT processing module.

2. Information processing system comprising:
on the one hand, a gateway between a local area communication network and a wide area communication network of an operator, said gateway comprising:
- a plurality of physical ports (1.7, 1.8) making it possible to connect apparatuses of the local area network;
- a physical port (1.15) connected to the wide area communication network of the operator;
- a router (1.6) allowing the routing of the data streams between these various ports;
- an NAT processing module for performing a translation of addresses into layer 3 of the traffic between the wide area communication network of the operator to an apparatus of the local area network other than that using said particular service and vice versa,
- a direct circuit management module (1.5) for directly relaying without translation any traffic corresponding to said particular service arising from the wide area communication network of the operator to said apparatus of the local area network using said particular service and vice versa,
- a local area DHCP server (1.4) for processing any DHCP request arising from an apparatus connected to said local area network,
and, on the other hand, at least one apparatus of the local area network using a particular service,
**characterized in that**
- said apparatus of the local area network which uses said particular service comprises:
- a plurality of layer 2 virtual addresses;
- means for marking with a marker relating to said particular service a DHCP discovery request relating to the configuration of one of these virtual addresses for said particular service used by said apparatus,
and **in that** said gateway comprises:
- means for detecting, on receipt of a DHCP discovery request, the presence or otherwise of a marker relating to said particular service,
- means for relaying any DHCP discovery request for which such a marker has been detected to a remote DHCP server (1.17) of the wide area communication network of the operator, without, contrary to any DHCP discovery request for which such a marker has not been detected, it being processed by said local area DHCP server (1.4);
- means for configuring, on detection of such a marker, the direct circuit management module (1.5) with the aid of the layer 2 virtual address at the origin of said particular DHCP discovery request in such a way that said direct circuit management module (1.5) then establishes a layer 2 direct circuit between the physical port (1.15) connected to the wide area communication network of the operator and the physical port to which said apparatus of the local area network using said service is connected, for any traffic carrying said layer 2 virtual address.

3. Method of configuring an information processing device intended to serve as gateway between a local area communication network and a wide area communication network of an operator which comprises:
- a plurality of physical ports (1.7, 1.8) making it possible to connect apparatuses of the local area network;
- a physical port (1.15) connected to the wide area communication network of the operator;
- a router (1.6) allowing the routing of the data streams between these various ports;
- a NAT processing module for translating addresses into layer 3,
- a direct circuit management module (1.5) for relaying directly without translation any traffic corresponding to a particular service arising from the wide area communication network of the operator to an apparatus of the local area network using said particular service and vice versa,
- a local area DHCP server (1.4) for processing any DHCP request arising from an apparatus connected to said local area network,
**characterized in that** said method comprises the following steps:
- a step of detecting a marker relating to a particular service for which is provided a particular DHCP discovery request that said device receives from a connected apparatus (1.10);
- a step of relaying any DHCP discovery request for which such a marker has been detected to a remote DHCP server (1.17) of the wide area communication network of the operator, without, contrary to any DHCP discovery request for which such a marker has not been detected, it being processed by said local area DHCP server (1.4);
- a step of establishing, on detection of such a marker, a layer 2 direct circuit between the physical port (1.15) connected to the wide area communication network of the operator and one of the physical ports making it possible to connect apparatuses of the local area network (1.7) for any traffic carrying the layer 2 virtual address carried by said particular DHCP discovery request,
the traffic not involved in said direct circuit being the subject of a translation of addresses into layer 3 by the NAT processing module.
